# EUROPÄISCHE PATENTSCHRIFT

(11) **EP 1 545 933 B1**
(45) Veröffentlichungstag und Bekanntmachung des Hinweises auf die Patenterteilung: **25.11.2009**
(21) Anmeldenummer: 03757877.0
(22) Anmeldetag: 22.09.2003
(51) Int. Cl.: B60R 11/02

(54) **Fahrzeugsitz mit Bildschirm**
Vehicle seat with monitor
Siège de véhicule avec moniteur

(30) Priorität: 23.09.2002 DE 10244100
(43) Veröffentlichungstag der Anmeldung: 29.06.2005
(73) Patentinhaber: Johnson Controls GmbH, 51399 Burscheid (DE)
(72) Erfinder: MANIATOPOULOS, Ioannis, 51399 Burscheid (DE); PELLENZ, Wolfgang, 53340 Meckenheim (DE); NDAGIJIMANA, Robin, 41469 Neuss (DE); HELMICH, Philipp, 51467 Bergisch Gladbach (DE)
(74) Vertreter: Hemmelmann, Klaus
(86) Internationale Anmeldenummer: PCT/EP2003/010491
(87) Internationale Veröffentlichungsnummer: WO 2004/028861

(56) Entgegenhaltungen:
- DE-A- 10 042 495
- DE-A- 19 708 764
- DE-A- 19 800 538
- US-A- 5 161 028
- US-B1- 6 179 263

## Beschreibung

Die Erfindung betrifft einem Fahrzeugsitz mit einem an der Rückenlehne des Fahrzeugsitzes gelenkig angeordneten Bildschirm.

### Stand der Technik

Ein gattungsgemäßer sitz ist aus der Druckschrift DE 197 08 764 A1 bekannt. Bei dem dort offenbarten Fahrzeugsitz für einen Eisenbahnwagon ist zentrisch in die Rückseite der Rückenlehne ein Bildschirm eingelassen, der vom dahinter sitzenden Reisenden eingesehen werden kann. Der Bildschirm ist neigungsverstelibar angeordnet und kann daher sowohl zur Anpassung an die Größe des Betrachters als auch zur Vermeidung von Lichtreflexen auf der Bildschirmoberfläche um eine horizontale, quer zur Sitzrichtung verlaufende Achse gekippt werden. Die Verstell möglichkeiten sind jedoch eingeschränkt und können daher nur bei einem relativ großen Abstand zwischen den Sitzen zu einem befriedigenden Ergebnis führen. Dieser ist jedoch insbesondere bei kompakten Kraftfahrzeugen nicht gegeben.

Die DE 100 42 495 A1 zeigt einen an der Rückemlehne eines Fahrzeugsitzes angeordneten Bildschirm, der aus einer Nichtgebrauchsposition, in welcher der Schirm mit einer Abdeckvorrichtung verdeckt ist, in eine Gebrauchsposition bringbar ist, in welcher der Bildschirm für einen Fahrzeugpassagier einsehbar ist.

### Aufgabe

Der Erfindung liegt die Aufgabe zugrunde, einen insbesondere zur Ausstanzung eines Kraftfahrzeugs geeigneten Bildschirm bereitzustellen, der von Insassen unterschiedlicher Körpergröße komfortabel einsehbar ist.

### Lösung

Die Aufgabe wird gelöst durch einen Fahrzeugsitz mit einem dazugehörigen Bildschirm gemäß den Merkmalen des Anspruchs 1.

Der Bildschirm ist bevorzugt an einem Schwenkarm angeordnet, der mit dem Ausstattungsteil und eine im Wesentlichen horizontale Achse drehbar verbunden ist. Mit Vorteil ist der Bildschirm dabei gegenüber dem Ausstattungsteil zum einen Winkel von 150° bis 210°, insbesondere etwa 180° von der ernsten Gebrauchslage insbesondere unter der Wirkung einer der Schwerkraft entgegengerichteten Federkraft zum Betrachter hin nach oben in die zweite, im Wesentlichen vertikale Gebrauchslage schwenkbar.

Um Beschädigungen bei Nichtgebrauch des Bildschirm zu vermeiden, kann ferner vorgesehen werden, dass der Bildschirm aus einer Parkstellung nach oben in die erste, untere Gebrauchsstellung schwenkbar ist. Hierzu führt er vorzugsweise eine Drehung um einen Winkel von 10° bis 20°, insbesondere etwa 15° aus der Parkposition in die erste, untere Gebrauchsstellung aus.

Nach einer weiteren vorteilhaften Ausgestaltung der Erfindung ist der Bildschirm seinerseits drehbar am Schwenkarm gelagert und vorzugsweise um eine im Wesentlichen horizontale, grundsätzlich jedoch auch vertikal oder schräg verlaufenden Achse gegenüber dem Schwenkarm drehbar, beispielsweise um einen Winkel von 150° bis 210°, insbesondere etwa 180°. Der Schwenkarm bildet an seinem dem Bildschirm zugewandten Ende vorzugsweise einen Rahmen aus, innerhalb dessen der Bildschirm drehbar angeordnet ist. Dabei kann die Drehachse des Bildschirm mittig im Rahmen, jedoch auch asymmetrisch mit einem Versatz zur Rahmenmitte verlaufen.

Um den Bildschirm in jeder Gebrauchsstellung sicher zu halten, kann vorgesehen werden, dass die Gelenke zwischen Ausstattungsteil und Schwenkarm und/oder Schwenkarm und Bildschirm mit einer Einrichtung zur kraft- und/oder formschlüssigen Arretierung versehen sind.

Ferner wirken das Gelenk zwischen Ausstattungsteil und Schwenkarm und das Gelenk zwischen Schwenkarm und Bildschirm mit Vorteil unter Verwendung einer drehmomentübertragenden Einrichtung in der Weise miteinander, dass beim Klappen des Schwenkarms gegenüber dem Ausstattungsteil der Bildschirm gegenüber dem Schwenkarm um einen im Wesentlichen gleichen Winkel verdreht wird. Auf diese Weise wird ohne weiteres Zutun sichergestellt, dass sowohl in der unteren wie in der oberen Gebrauchsstellung das Sichtfenster zum Betrachter hinweist. Dabei ist es grundsätzlich möglich, den Bildschrim mit oder entgegen der Drehrichtung des Schwenkarms in diesem rotieren zu lassen. Die drehmomentübertragende Einrichtung kann dabei beispielsweise als Riementrieb mit parallel zueinander verlaufenden oder - sich überkreuzenden Riementrumen ausgebildet werden.

Besonders vorteilhaft wird ein Fahrzeugsitz mit einem erfindungsgemäßen Bildschirm ausgestattet, wobei der der Bildschirm im Bereich der Oberkante der Rückenlehne drehbar gelagert ist. Dabei ist der Bildschirm in der ersten, unteren Gebrauchslage vorzugsweise hinter der Rückseite der Rückenlehne und in der zweiten, oberen Gebrauchslage hinter der Kopfstütze angeordnet.

Wird der betreffende Fahrzeugsitz beispielsweise vom Fahrer oder Beifahrer eines Kraftfahrzeugs eingenommen, kann der Bildschirm in der unteren Gebrauchstellung von in der zweiten Sitzreihe befindlichen Kindern, in der oberen Gebrauchsstellung jedoch von am gleichen Ort sitzenden Erwachsenen bequem eingesehen werden. Ebenso kann der Bildschirm an der Rückenlehne der zweiten Sitzreihe angeordnet und von den Insassen einer dritten Sitzreihe betrachtet werden, die in sogenannten Vans inzwischen üblich ist.

Zum Schutz vor Ladegut läßt sich der Bildschirm vorzugsweise durch Verdrehen gegenüber dem Schwenkarm um einen Winkel von 150° bis 210°, insbesondere etwa 180° beispielsweise in einer Parkposition in eine Schutzstellung verstellen, in welcher sein Display der Rückenlehne zugewandt ist.

### Figuren

Die Figuren stellen beispielhaft und schematisch verschiedene Ausführungen der Erfindung dar.

### Es zeigen:

- Fig. 1: einen erfindungsgemäß ausgestatteten Kraftfahrzeugsitz mit Bildschirm in der oberen Gebrauchsstellung sowie einer Zwischenstellung
- Fig. 2: den Sitz nach Fig. 1 mit Bildschirm in der unteren Gebrauchsstellung

- Fig. 3: den in Fig. 1 und 2 dargestellten Fahrzeugsitz mit Bildschirm in Parkposition
- Fig. 4: einen Kraftfahrzeugsitz mit einem Bildschirm nach Anspruch 12

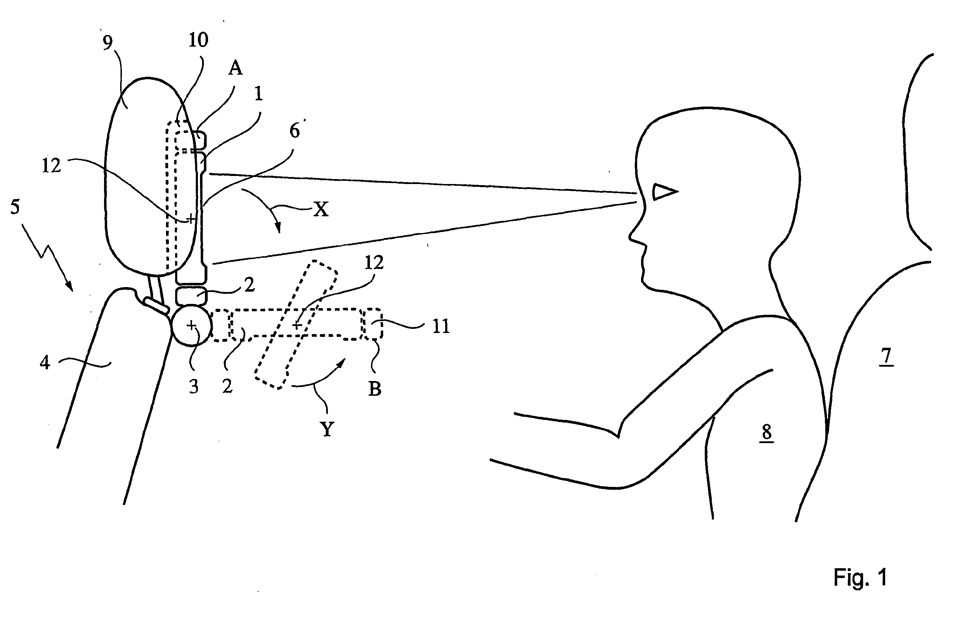

Der in Fig. 1 dargestellte Bildschirm 1 ist mittels eines Schwenkarms 2 um eine horizontale, quer zur Sitzrichtung verlaufende Drehachse 3 klappbar an der Oberkante der Rückenlehne 4 eines Fahrzeugsitzes 5, beispielsweise des Fahrer- oder Beifahrersitzes eines Kraftfahrzeugs angeordnet. In einer oberen Gebrauchsstellung (Position A) befindet sich das Display 6 des Bildschirms 1 im Wesentlichen in Augenhöhe eines auf dem Rücksitz 7 befindlichen erwachsenen Fahrzeuginsassen 8 auf der Rückseite der Kopfstütze 9 des Fahrzeugsitzes 5. Die Kopfstütze 9 weist rückseitig eine Ausnehmung 10 auf, welche den Bildschirm 1 in der oberen Gebrauchsstellung teilweise aufnimmt.

Der Schwenkarm 2 weist einen rechteckigen Rahmen 11 auf, der den Bildschirm 1 vollumfänglich umgibt. Der Bildschirm 1 mittig im Rahmen 11 um eine parallel zur Drehachse 3 versetzte weitere Drehachse 12 drehbar gelagert.

Die den Drehachsen 3 und 12 zugeordneten Gelenke sind mit Mitteln zur lösbaren Arretierung ausgestattet, um den Bildschirm 1 in der oberen Gebrauchsstellung und das Display 6 in der gewünschten Neigung zum Betrachter zu halten.

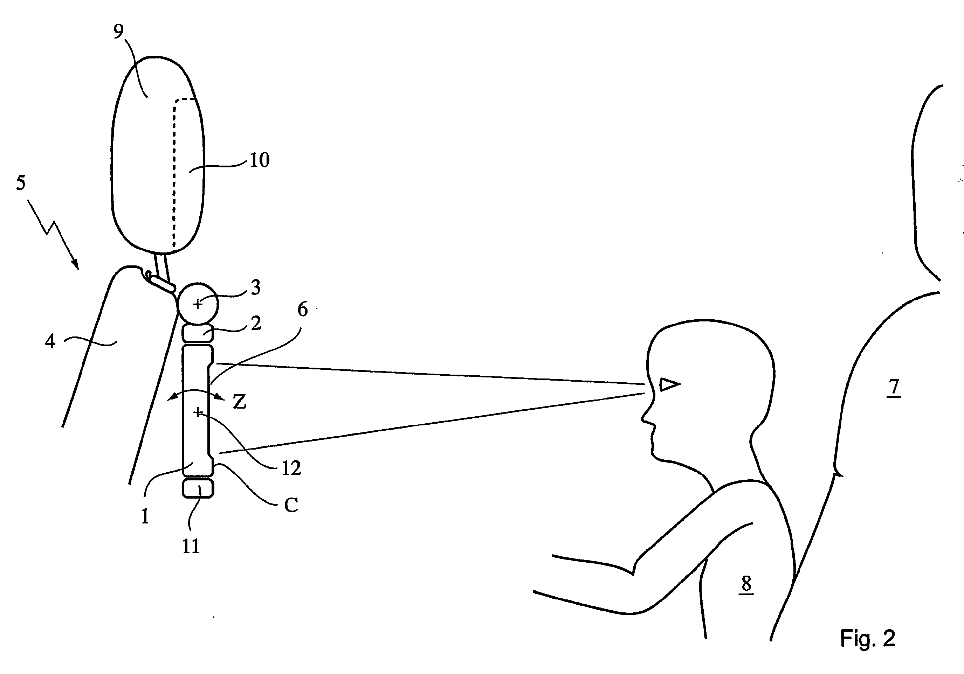

Durch Klappen des Schwenkarms 2 um die Drehachse 3 in Richtung des Rücksitzes 7 (Zwischenstellung B) um etwa 180° nach unten (Pfeil X) läßt sich der Bildschirm in eine weitere, untere Gebrauchslage (Position C) verstellen, die in Fig. 2 abgebildet ist. Der Bildschirm befindet sich nun hinter der Rückenlehne 4 des Fahrzeugsitzes 5. Damit auch in der unteren Gebrauchsstellung das Display 6 zum Insassen 8 weist, wird der Bildschirm 1 in der Zwischenstellung nach Fig. 1 seinerseits im Rahmen 11 um ungefähr 180° verdreht (Pfeil Y). Diese Bewegung wird im Ausführungsbeispiel manuell vorgenommen. Durch Neigen des Bildschirms 1 im Rahmen 11 (Pfeil Z) kann in jeder Gebrauchsstellung eine weitere Anpassung an die Position des Insassen 8 erfolgen.

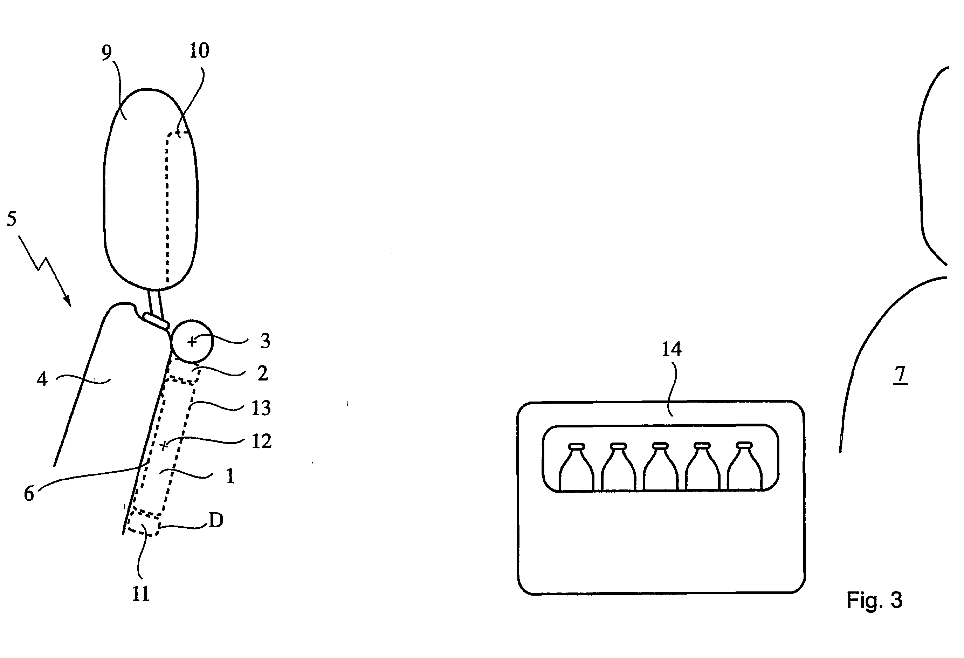

Um das Display 6 des Bildschirms 1 bei Nichtgebrauch vor Beschädigungen zu schützen, kann es ferner in die in Fig. 3 dargestellte Parkposition D überführt werden, die gegenüber der unteren Gebrauchsstellung (Position C) um etwa 15° zur Rückenlehne 4 hin geneigt ist. Vor dem Verstellen in die Parkposition D ist der Bildschirm 1 aus der unteren Gebrauchsstellung (Position C) in die Zwischenstellung B zu klappen, in welcher der Bildschirm 1 im Rahmen 11 um die Drehachse 12 derart verdreht wird, dass das Display 6 in Parkposition D der Rückenlehne 4 zugewandt ist. Einem möglichem Kontakt mit auf dem Rücksitz 7 befindlichen Ladegut 14 ist somit nur die robuste Rückseite 13 des Bildschirms 1 ausgesetzt.

Aus der oberen Gebrauchsstellung (Position A) kann der Bildschirm 1 um die Drehachse 3 herum unmittelbar in die Parkposition D geklappt werden, da sich das Display 6 in diesem Fall bereits in der gewünschten Ausrichtung zur Rückenlehne 4 hin befindet.

Ein zwangsläufiges Verdrehen des Bildschirms 1 im Rahmen 11 beim Herunterklappen aus der oberen in die untere Gebrauchsstellung kann dadurch herbeigeführt werden, dass die Drehbewegung in der Drehachse 3 gleichgerichtet oder gegensinnig auf die Drehachse 12 übertragen wird.

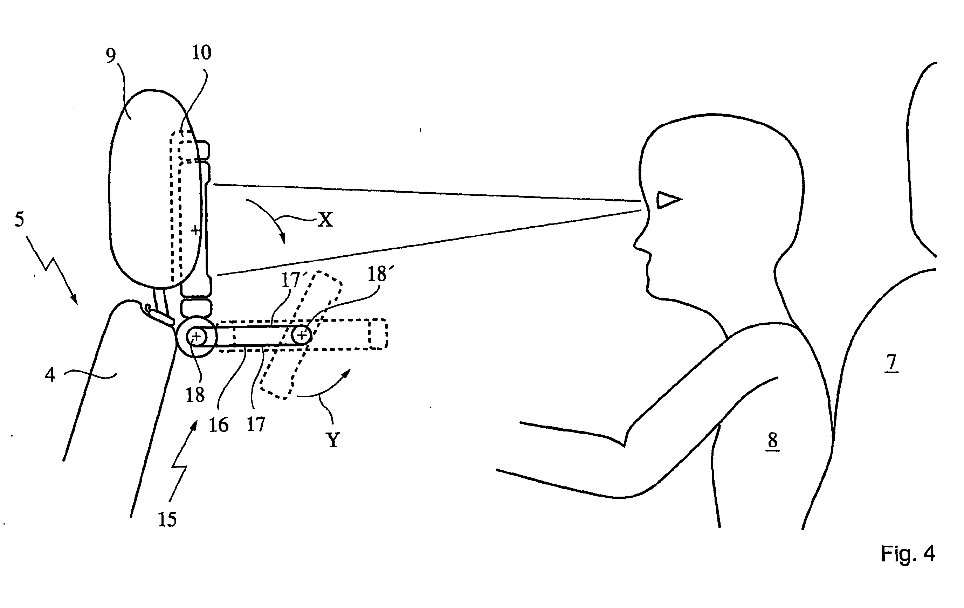

Hierzu wird bei dem Ausführungsbeispiel nach Fig. 4 ein Riementrieb 15 aus einem Riemen 16 mit parallel zueinander verlaufenden Riementrumen 17, 17' und im Bereich der Drehachsen 3, 12 angeordneten Riemenscheiben 18, 18' eingesetzt, der die Drehung in Richtung der Pfeile X und Y synchronisiert.

### Bezugszeichen

- 1: Bildschirm
- 2: Schwenkarm
- 3: Drehachse
- 4: Rückenlehne
- 5: Fahrzeugsitz
- 6: Display
- 7: Rücksitz
- 8: Insasse (erwachsen)
- 9: Kopfstütze
- 10: Ausnehmung
- 11: Rahmen
- 12: Drehachse
- 13: Rückseite (des Bildschirms)
- 14: Ladegut
- 15: Riementrieb
- 16: Riemen
- 17: Riementrum
- 18: Riemenscheibe

## Patentansprüche

1. Fahrzeugsitz mit einer Rückenlehne (4) und einer Kopfstütze sowie einem an der Rückenlehne gelenkig angeordneten Bildschirm (1), **dadurch gekennzeichnet, dass** der Bildschirm (1) gegenüber der Rückenlehne (4) aus einer ersten, unteren Gebrauchslage (Position C) um einen winkel von 150° bis 210°, insbesondere etwa 180° in eine zweite, obere und im Wesentlichen vertikale Gebrauchslage, (Position A) hinter der Kopfstütze im Bereich der Oberkante der Rückenlehne klappbar ist.

2. Fahrzeugsitz nach Anspruch 1, **dadurch gekennzeichnet, dass** der Bildschirm (1) an einem Schwenkarm (2) angeordnet ist, der mit der Rückenlehne um eine im Wesentlichen horizontale Drehachse (3) drehbar verbunden ist.

3. Fahrzeugsitz nach Anspruch 2, **dadurch gekennzeichnet, dass** der Bildschirm (1) von der ersten Gebrauchslage unter der Wirkung einer der Schwerkraft entgegengerichteten Federkraft zum Betrachter hin nach oben in die zweite Gebrauchslage klappbar ist.

4. Fahrzeugsitz nach einem der vorhergehenden Ansprüche, **dadurch gekennzeichnet, dass** der Bildschirm (1) aus einer Parkposition (D) nach oben in die erste, untere Gebrauchsstellung schwenkbar ist.

5. Fahrzeugsitz nach Anspruch 4, **dadurch gekennzeichnet, dass** der Bildschirm (1) um einen Winkel von 10° bis 20°, insbesondere etwa 15° aus der Parkposition in die erste, untere Gebrauchsstellung schwenkbar ist.

6. Fahrzeugsitz nach einem der Ansprüche 2 bis 5, **dadurch gekennzeichnet, dass** der Bildschirm (1) seinerseits drehbar am Schwenkarm (2) gelagert ist.

7. Fahrzeugsitz nach Anspruch 6, **dadurch gekennzeichnet, dass** der Bildschirm um eine im Wesentlichen horizontale Drehachse (12) gegenüber dem Schwenkarm (2) drehbar ist.

8. Fahrzeugsitz nach Anspruch 7, **dadurch gekennzeichnet, dass** der Bildschirm (1) gegenüber dem Schwenkarm (2) um einen Winkel von 150° bis 210°, insbesondere etwa 180° drehbar ist.

9. Fahrzeugsitz nach einem der Ansprüche 6 bis 8, **dadurch gekennzeichnet, dass** der Schwenkarm (2) an seinem dem Bildschirm (1) zugewandten Ende einen Rahmen (11) ausbildet, innerhalb dessen der Bildschirm (1) drehbar angeordnet ist.

10. Fahrzeugsitz nach einem der vorhergehenden Ansprüche, **dadurch gekennzeichnet, dass** die Gelenke zwischen Ausstattungsteil und Schwenkarm (2) und/oder Schwenkarm (2) und Bildschirm (1) mit einer lösbaren Einrichtung zur kraft- und/oder formschlüssigen Arretierung versehen sind.

11. Fahrzeugsitz nach einem Ansprüche 6 bis 10, **dadurch gekennzeichnet, dass** das Gelenk zwischen Ausstattungsteil und Schwenkarm (2) und das Gelenk zwischen Schwenkarm (2) und Bildschirm (1) unter Verwendung einer drehmomentübertragenden Einrichtung in der Weise miteinander wirken, dass beim Klappen des Schwenkarms gegenüber dem Ausstattungsteil der Bildschirm gegenüber dem Schwenkarm um einen im Wesentlichen gleichen Winkel verdreht wird.

12. Fahrzeugsitz nach Anspruch 11, **dadurch gekennzeichnet, dass** die drehmomentübertragende Einrichtung als Riementrieb (15) ausgebildet ist.

## Claims

1. Vehicle seat having a back rest (4) and a head restraint and also a screen (1) which is pivotally arranged on the back rest, **characterized in that** the screen (1) can be folded in relation to the back rest (4) from a first, lower position of use (position C) through an angle of 150° to 210°, in particular approximately 180°, into a second, upper and basically vertical position of use (position A) behind the head restraint in the area of the upper edge of the back rest.

2. Vehicle seat according to Claim 1, **characterized in that** the screen (1) is arranged on a pivoting arm (2), which is connected to the back rest so that it can rotate about a basically horizontal axis of rotation (3).

3. Vehicle seat according to Claim 2, **characterized in that** the screen (1) can be folded from the first position of use, under the effect of a spring force opposed to the gravitational force, towards the viewer up into the second position of use.

4. Vehicle seat according to any one of the preceding claims, **characterized in that** the screen (1) can be pivoted upwards from a stowed position (D) into the first, lower position of use.

5. Vehicle seat according to Claim 4, **characterized in that** the screen (1) can be pivoted through an angle of 10° to 20°, in particular approximately 15°, from the stowed position into the first, lower position of use.

6. Vehicle seat according to any one of Claims 2 to 5, **characterized in that** the screen (1) is in turn rotatably supported on the pivoting arm (2).

7. Vehicle seat according to Claim 6, **characterized in that** the screen is rotatable about a basically horizontal axis of rotation (12) in relation to the pivoting arm (2).

8. Vehicle seat according to Claim 7, **characterized in that** the screen (1) is rotatable through an angle of 150° to 210°, in particular approximately 180°, in relation to the pivoting arm (2).

9. Vehicle seat according to any one of Claims 6 to 8, **characterized in that** pivoting arm (2), at its end facing the screen (1), forms a frame (11), inside which the screen (1) is rotatably arranged.

10. Vehicle seat according to any one of the preceding claims, **characterized in that** the articulated joints between the fitting and the pivoting arm (2) and/or between the pivoting arm (2) and the screen (1) are provided with a releasable non-positive arresting device and/or positive locking device.

11. Vehicle seat according to any one of Claims 6 to 10, **characterized in that** the articulated joint between the fitting and the pivoting arm (2) and the articulated joint between the pivoting arm (2) and the screen (1) interact with one another through the use of a torque transmitting device, in such a way that when folding the pivoting arm in relation to the fitting the screen is turned through a basically equal angle in relation to the pivoting arm.

12. Vehicle seat according to Claim 11, **characterized in that** the torque-transmitting device takes the form of a belt drive (15).

## Revendications

1. Siège de véhicule doté d'un dossier (4) et d'un appuie-tête ainsi que d'un écran (1) disposé de façon articulée contre le dossier, **caractérisé en ce que** l'écran (1) peut être rabattu par rapport au dossier (4) suivant un angle de 150° à 210°, notamment d'environ 180°, d'une première position d'utilisation inférieure (position C) dans une deuxième position d'utilisation supérieure et pour l'essentiel verticale (position A), derrière l'appuie-tête, dans la zone de l'arête supérieure du dossier.

2. Siège de véhicule selon la revendication 1, **caractérisé en ce que** l'écran (1) est disposé au niveau d'un bras pivotant (2) relié au dossier de façon à pouvoir pivoter autour d'un axe de rotation (3) pour l'essentiel horizontal.

3. Siège de véhicule selon la revendication 2, **caractérisé en ce que** l'écran (1) peut être rabattu vers le haut en direction de l'observateur de la première position d'utilisation dans la deuxième position d'utilisation sous l'effet d'une force élastique opposée à la gravité.

4. Siège de véhicule selon l'une quelconque des revendications précédentes, **caractérisé en ce que** l'écran (1) peut être pivoté vers le haut d'une position de rangement (D) dans la première position d'utilisation inférieure.

5. Siège de véhicule selon la revendication 4, **caractérisé en ce que** l'écran (1) peut être pivoté de la position de rangement dans la première position d'utilisation inférieure suivant un angle allant de 10° à 20°, notamment d'environ 15°.

6. Siège de véhicule selon l'une quelconque des revendications 2 à 5, **caractérisé en ce que** l'écran (1) est pour sa part disposé de façon pivotante au niveau du bras pivotant (2).

7. Siège de véhicule selon la revendication 6, **caractérisé en ce que** l'écran peut tourner autour d'un axe de rotation (12) pour l'essentiel horizontal par rapport au bras pivotant (2).

8. Siège de véhicule selon la revendication 7, **caractérisé en ce que** l'écran (1) peut tourner par rapport au bras pivotant (2) suivant un angle allant de 150° à 210°, notamment d'environ 180°.

9. Siège de véhicule selon l'une quelconque des revendications 6 à 8, **caractérisé en ce que** le bras pivotant (2) forme un cadre (11) à l'intérieur duquel l'écran (1) est disposé de façon pivotante au niveau de son extrémité orientée vers l'écran (1).

10. Siège de véhicule selon l'une quelconque des revendications précédentes, **caractérisé en ce que** les articulations sont pourvues d'un dispositif amovible d'arrêt par complémentarité de formes et/ou de forces entre la partie d'équipement et le bras pivotant (2) et/ou entre le bras pivotant (2) et l'écran (1).

11. Siège de véhicule selon l'une quelconque des revendications 6 à 10, **caractérisé en ce que** l'articulation positionnée entre la partie d'équipement et le bras pivotant (2) et l'articulation positionnée entre le bras pivotant (2) et l'écran (1) interagissent en cas d'utilisation d'un dispositif de transmission de couple de telle façon qu'en cas de rabattement du bras pivotant par rapport à la partie d'équipement, l'écran pivote suivant un angle pour l'essentiel identique par rapport au bras pivotant.

12. Siège de véhicule selon la revendication 11, **caractérisé en ce que** le dispositif de transmission de couple prend la forme d'un entraînement à courroie (15).
